Europäisches Patentamt

European Patent Office

Office européen des brevets

(19)

(11) **EP 1 116 314 B1**

(12) **EUROPÄISCHE PATENTSCHRIFT**

| | |
|---|---|
| (45) Veröffentlichungstag und Bekanntmachung des Hinweises auf die Patenterteilung:<br>**14.08.2002  Patentblatt 2002/33** | (51) Int Cl.⁷: $H02H\ 9/04$ |
| (21) Anmeldenummer: **99953647.7** | (86) Internationale Anmeldenummer:<br>**PCT/DE99/02731** |
| (22) Anmeldetag: **01.09.1999** | (87) Internationale Veröffentlichungsnummer:<br>**WO 00/19573 (06.04.2000 Gazette 2000/14)** |

(54) **SCHUTZSCHALTUNG AUF EINER INTEGRIERTEN SCHALTUNG**

PROTECTIVE CIRCUIT ON AN INTEGRATED CIRCUIT

CIRCUIT DE PROTECTION SUR UN CIRCUIT INTEGRE

| | |
|---|---|
| (84) Benannte Vertragsstaaten:<br>**AT DE FR GB IT** | (72) Erfinder:<br>• **KAHL, Alexander**<br>  **A-9500 Vollach (AT)**<br>• **HAUPTMANN, Jörg**<br>  **A-9241 Wernberg (AT)** |
| (30) Priorität: **25.09.1998  DE 19844121** | |
| (43) Veröffentlichungstag der Anmeldung:<br>**18.07.2001  Patentblatt 2001/29** | (74) Vertreter: **Reinhard - Skuhra - Weise & Partner**<br>**Postfach 44 01 51**<br>**80750 München (DE)** |
| (73) Patentinhaber: **Infineon Technologies AG**<br>**81669 München (DE)** | (56) Entgegenhaltungen:<br>**EP-A- 0 404 220    EP-A- 0 651 490** |

EP 1 116 314 B1

**Beschreibung**

Die Erfindung betrifft eine Schutzschaltung auf einer integrierten Schaltung nach dem Oberbegriff von Patentanspruch 1, welche aus der EP 0 404 220 A1 bekannt ist.

Aus der EP 0 651 490 A1 ist es bekannt, einen Spannungsteiler in einer Überspannungsschutzschaltung zur Erfassung einer Schwellspannung zu verwenden.

Um integrierte Schaltungen vor Spannungen zu schützen, die die integrierte Schaltung schädigen oder zerstören können, werden an die Anschlüsse (im folgenden als Pads bezeichnet) der integrierten Schaltung Schutzschaltungen angeschlossen. Insbesondere durch elektrostatische Entladungen (ESD = Electrostatic Discharge) hervorgerufene Spannungen (im folgenden als ESD-Spannungen bezeichnet) an den Pads können empfindliche Strukturen auf den integrierten Schaltungen zerstören.

Eine häufig benutzte einfache Schutzschaltung zur Begrenzung von zu hohen Spannungen an den Pads besteht aus einem Widerstand zur Eingangsstrombegrenzung und zwei Dioden, die in Sperrpolung zwischen das Pad und eine Versorgungsspannung bzw. ein Bezugspotential der integrierten Schaltung geschaltet sind. Überschreitet eine Spannung an einem Pad die Versorgungsspannung, beginnt die Diode in Sperrpolung zwischen dem Pad und der Versorgungsspannung zu leiten und die Spannung am Pad wird auf die Versorgungsspannung begrenzt. Dadurch wird der Aussteuerbereich einer Spannung an einem Pad auf einen Bereich zwischen der Versorgungsspannung und dem Bezugspotential begrenzt. Die zweite Diode beginnt zu leiten, wenn eine Spannung am Pad das Bezugspotential unterschreitet.

Vielfach benötigen jedoch beispielsweise analoge Schaltungskomponenten auf der integrierten Schaltung höhere Spannungen als die Versorgungsspannung. Dabei ist jedoch die einfache Schutzschaltung hinderlich, da Spannungen an den Pads, die größer sind als die Versorgungsspannung der integrierten Schaltung, durch diese Schutzschaltung auf die Versorgungsspannung begrenzt werden.

Aus US 5,400,202 ist eine Schutzschaltung bekannt, die einen Thyristor (SCR = Silicon Controlled Rectifier) aufweist, wobei der Thyristor ab einer bestimmten Spannung am Pad zündet und eine niederohmige Verbindung zwischen dem Pad und einem Bezugspotential der integrierten Schaltung herstellt, wodurch ESD-Spannungen am Pad wirksam begrenzt werden. Thyristoren können vorteilhafterweise hohe Ströme leiten und sind schnell einschaltbar. In US 5,781,388 ist in einer Schutzschaltung ein Spannungsteiler vorgesehen, der aus einer Kapazität und einem Widerstand besteht und bei Spannungsänderungen am Pad eine Schwellenspannung erzeugt, die zur Zündung eines Thyristors verwendet wird. Nachteilig sind bei diesen Schutzschaltungen die erforderlichen hohen Zündspannungen zum Einschalten des Thyristors.

Das der Erfindung zugrundeliegende technische Problem liegt daher darin, eine Schutzschaltung anzugeben, die die eingangs erwähnten Nachteile vermeidet.

Diese Aufgabe wird durch eine Schutzschaltung mit den Merkmalen von Patentanspruch 1 gelöst. Vorteilhafte Ausgestaltungen der Schutzschaltung ergeben sich aus den jeweiligen Unteransprüchen.

Die Erfindung betrifft eine Schutzschaltung, die mit einem Pad einer integrierten Schaltung verbunden ist. Die Schutzschaltung weist eine Schwellendetektoreinrichtung auf, die aus einer Spannung am Pad eine Schwellenspannung ableitet. Die Schwellenspannung steuert einen ersten Transistor, dessen Laststrecke an einem ersten Anschluß mit dem Pad verbunden ist und dessen Laststrecke an einem zweiten Anschluß mit dem Steueranschluß eines zweiten Transistors verbunden ist. Die Laststrecke des zweiten Transistors ist parallel zwischen das Pad und ein Bezugspotential geschaltet und verbindet das Pad mit dem Bezugspotential. Vorteilhafterweise ist nur eine niedrige Schwellenspannung zum Einschalten der Schutzstruktur erforderlich, wobei die Schwellenspannung lediglich der doppelten Einschaltspannung eines Transistors entspricht.

In einer besonders bevorzugten Ausführungsform sind anstatt des zweiten Transistors eine Vielzahl von Transistoren vorgesehen, wobei die Steueranschlüsse der Vielzahl von Transistoren mit dem zweiten Anschluß der Laststrecke des ersten Transistors verbunden sind und die Laststrecken der Vielzahl von Transistoren parallel zwischen das Pad und das Bezugspotential geschaltet sind.

Die Schwellendetektoreinrichtung weist einen Spannungsteiler auf, der zwischen das Pad und das Bezugspotential geschaltet ist. An einem Knotenpunkt des Spannungsteilers ist die Schwellenspannung abgreifbar. Der Spannungsteiler wird aus hochohmigen Widerständen aufgebaut, die in integrierten Schaltungen einfach realisierbar sind, um einen Strom durch den Spannungsteiler niedrig zu halten.

In einer besonders bevorzugten Ausführungsform sind die Transistoren npn-Bipolartransistoren.

In einer weiteren bevorzugten Ausführungsform ist zwischen das Pad und die Laststrecken der Transistoren jeweils ein Widerstand geschaltet, wobei die Widerstände zur Strombegrenzung dienen.

Zwischen die Widerstände und das Pad ist eine Diode geschaltet. Die Diode sperrt, wenn eine Spannung am Pad unter die Spannung am n-Anschluß der Diode absinkt.

Zwischen den zweiten Anschluß der Laststrecke des ersten Transistors und dem Bezugspotential ist ein Widerstand geschaltet, der zur Arbeitspunkteinstellung des ersten Transistors dient.

Weitere Vorteile, Merkmale und Anwendungsmöglichkeiten der Erfindung ergeben sich aus der nachfolgenden Beschreibung von Ausführungsbeispielen in Verbindung mit der Zeichnung. In der Zeichnung zeigt

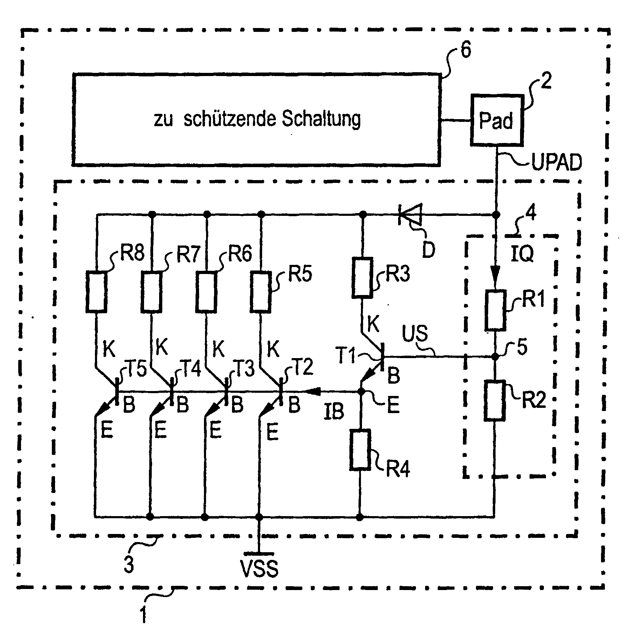

Fig.1   ein Ausführungsbeispiel einer Schutzschaltung nach der Erfindung.

Eine integrierte Schaltung 1 weist ein Pad 2 auf, das mit einer Schutzschaltung 3 verbunden ist. Das Pad 2 ist mit weiteren Schaltungskomponenten 6 verbunden, die vor zu hohen Spannungen am Pad, wie beispielsweise ESD-Spannungen, zu schützen sind.

Die Schutzschaltung 3 weist eine Schwellendetektoreinrichtung 4 auf, die aus einem Spannungsteiler R1 und R2 besteht. Die Vorrichtung 4 ist zwischen das Pad 2 und ein Bezugspotential VSS der integrierten Schaltung geschaltet. Der Spannungsteiler teilt eine am Pad 2 anliegende Spannung UPAD auf eine Schwellenspannung US, die an einem Knotenpunkt 5 des Spannungsteilers anliegt:

$$US = UPAD \cdot \frac{R2}{R1 + R2}$$

Die Schwellenspannung US ist somit über das Spannungsteilerverhältnis einstellbar und muß bei der Spannung, auf die begrenzt werden soll, mindestens zweimal der Basis-Emitter-Spannung eines npn-Bipolartransistors betragen um Transistoren der Schutzschaltung zu schalten. Soll beispielsweise ab einer Spannung von 8V die Schutzstruktur angeschaltet werden, gilt für das Spannungsteilerverhältnis bei einer Basis-Emitter-Spannung UBE von ca. 0,7V:

$$US \approx 2 \cdot UBE \approx 1,4\,V = 8\,V \cdot \frac{R2}{R1 + R2}$$

Typische Werte für die Widerstände des Spannungsteilers betragen:

$$R1 = 300\,k\Omega \text{ und } R2 = 75\,k\Omega$$

Daraus ergibt sich ein Spannungsteilerverhältnis von:

$$\frac{R2}{R1 + R2} = \frac{75\,k\Omega}{375\,k\Omega} = 0,2$$

Bei einer Spannung von ca. 7V am Pad beträgt die Schwellenspannung bei obigen Widerstandswerten erforderliche 1,4V.

Die Schwellenspannung US steuert einen ersten bipolaren npn-Transistor T1 an. Der Emitter des Transistors T1 ist über einen Widerstand R4 mit dem Bezugspotential VSS verbunden. Der Kollektor des Transistors T1 ist über einen Widerstand R3 mit dem n-Anschluß einer Diode D verbunden. Der p-Anschluß der Diode D ist wiederum mit dem Pad 2 verbunden. Die zwei Widerstände R3 und R4 stellen den Arbeitspunkt des Transistors T1 ein.

Weitere bipolare npn-Transistoren T2, T3, T4 und T5 werden parallel von dem ersten Transistor T1 angesteuert. Dazu ist die Basis jedes Transistors T2, T3, T4 und T5 parallel mit dem Kollektor des Transistors T1 verbunden. Die Emitter der Transistoren T2, T3, T4 und T5 sind gemeinsam mit dem Bezugspotential VSS verbunden. Der Kollektor jedes Transistors T2, T3, T4 und T5 ist jeweils über einen Widerstand R5, R6, R7 bzw. R8 mit dem n-Anschluß der Diode D verbunden. Die Laststrecken dieser Transistoren T2, T3, T4 und T5 verbinden zusammen mit den jeweils vorgeschalteten Widerständen R5, R6, R7 bzw. R8 das Pad 2 mit dem Bezugspotential VSS, wobei der Widerstand über die Transistoren T2, T3, T4 und T5 einstellbar ist.

Die Schutzschaltung arbeitet wie folgt:

Überschreitet eine Spannung UPAD am Pad 2 einen vorgegebenen Wert, so daß die Schwellspannung US etwa zweimal der Basis-Emitter-Spannung eines bipolaren npn-Transistors entspricht, schaltet der erste Transistor T1 und beginnt zu leiten. Ein Strom IB fließt über die Laststrecke dieses Transistors auf die Basis der Transistoren T2, T3, T4 und T5. Diese Transistoren werden ausgesteuert, so daß der Widerstand ihrer Laststrecken kleiner wird und das Pad 2 niederohmig mit dem Bezugspotential VSS verbunden wird und ein Strom vom Pad 2 über die parallelgeschalteten Transistoren T2, T3, T4 und T5 fließt. Je höher nun die Spannung UPAD am Pad wird, desto mehr steigt auch die Schwellenspannung US und steuert den ersten Transistor auf bis dieser in Sättigung geht. Der erste Transistor T1 steuert über seinen Emitterstrom die parallelgeschalteten Transistoren T2, T3, T4 und T5 weiter auf, so daß die Verbindung zwischen Pad 2 und Bezugspotential VSS über die parallelgeschalteten Transistoren T2, T3, T4 und T5 immer niederohmiger wird. Dadurch verringert sich auch die Spannung UPAD am Pad 2.

Unterschreitet die Spannung UPAD am Pad 2 einen vorgegebenen Wert, sinkt auch die Schwellenspannung US. Bei sinkender Schwellenspannung US werden die Laststrecken des ersten Transistors T1 und der parallelgeschalteten Transistoren T2, T3, T4 und T5 hochohmiger. Das Potential am n-Anschluß der Diode D steigt und die Diode D sperrt sobald die Potentialdifferenz zwischen dem n-Anschluß und dem p-Anschluß unter die Durchlaßspannung der Diode D sinkt. Dadurch wird die Schutzstruktur abgeschaltet und nimmt nur noch einen Strom über den Spannungsteiler R1 und R2 vom Pad 2 auf.

Über die Anzahl der parallelgeschalteten Transistoren ist die Strombelastbarkeit der Schutzschaltung einstellbar. Allerdings muß dabei beachtet werden, daß der Strom IB, der über den Emitter E vom ersten Transistor T1 auf die Basis der parallelgeschalteten Transistoren T2, T3, T4, T5 fließt, ausreichend dimensioniert ist, um die parallelgeschalteten Transistoren T2, T3, T4, T5 zu steuern. Gegebenenfalls muß der erste Transistor T1 größer dimensioniert werden, um mehr Strom zum Steuern der parallelgeschalteten Transistoren T2, T3, T4, T5 liefern zu können. Die Strombelastbarkeit der Schutzstruktur kann auch durch eine höhere Strombelastbarkeit der einzelnen parallelgeschalteten Transistoren T2, T3, T4, T5 eingestellt werden, wobei wiederum der zum Aussteuern der Transistoren nötige Basisstrom beachtet werden muß.

Die den parallelgeschalteten Transistoren T2, T3, T4, T5 vorgeschalteten Widerstände R5, R6, R7, R8 sind niederohmig zu dimensionieren und dienen lediglich als Strombegrenzende Vorwiderstände zum Schutz der Transistoren vor zu hohen Strömen.

Über den Spannungsteiler fließt ständig ein Strom IQ, so daß zur Minimierung des Stromverbrauchs der Schutzschaltung der Widerstandswert (R1 + R2) des Spannungsteilers möglichst groß sein sollte.

## Patentansprüche

1. Schutzschaltung auf einer integrierten Schaltung, die eine Spannung an einem Pad (2) einer integrierten Schaltung (1) begrenzt, wobei die Schutzschaltung (3) zwischen das Pad (2) und ein Bezugspotential (VSS) der integrierten Schaltung (1) geschaltet ist und eine Schwellendetektoreinrichtung (4) vorgesehen ist, die mit dem Pad (2) verbunden ist und aus der Spannung am Pad (2) eine Schwellenspannung (US) ableitet, mit:

   - einem ersten Transistor (T1), dessen Laststrecke an einem ersten Anschluß (K) mit dem Pad (2) verbunden ist und dessen Steueranschluß (B) die Schwellenspannung (US) zugeführt wird, wobei zwischen den zweiten Anschluß (E) der Laststrecke des ersten Transistors (T1) und dem Bezugspotential (VSS) ein Widerstand (R4) geschaltet ist, und

   - einem zweiten Transistor (T2), dessen Steueranschluß (B) mit einem zweiten Anschluß (E) der Laststrecke des ersten Transistors (T1) verbunden ist und dessen Laststrecke zwischen das Pad (2) und das Bezugspotential (VSS) geschaltet ist,

   **dadurch gekennzeichnet, daß**
   die Schwellendetekroreinrichtung (4) einen hochohmigen Spannungsteiler (R1, R2) aufweist, der zwischen das Pad (2) und das Bezugspotential (VSS) geschaltet ist, wobei an einem Knotenpunkt (5) des Spannungsteilers (R1, R2) die Schwellenspannung (US) abgreifbar ist; und zwischen das Pad (2) und die Laststrecken des ersten Transistors (T1) und des zweiten Transistors (T2) eine Diode (D) derart geschaltet ist, daß die Diode (D) sperrt, wenn die Spannung am Pad (2) unter einen vorgegebenen Wert sinkt, so daß die Schutzschaltung (3) abgeschaltet ist.

2. Schutzschaltung nach Anspruch 1,
   **dadurch gekennzeichnet, daß**
   der zweite Transistor (T2) aus einer Vielzahl parallel geschalteter Transistoren (T2, T3, T4, T5) gebildet ist, wobei die Steueranschlüsse (B) der Vielzahl parallel geschalteter Transistoren (T2, T3, T4, T5) mit dem zweiten Anschluß (E) der Laststrecke des ersten Transistors (T1) verbunden sind und die Laststrecken der Vielzahl parallel geschalteter Transistoren (T2, T3, T4, T5) parallel zwischen das Pad (2) und das Bezugspotential (VSS) geschaltet sind.

3. Schutzschaltung nach einem der vorhergehenden Ansprüche,
   **dadurch gekennzeichnet, daß**
   die Transistoren (T1, T2, T3, T4, T5) npn-Bipolartransistoren sind.

4. Schutzschaltung nach einem der vorhergehenden Ansprüche,
   **dadurch gekennzeichnet, daß**
   zwischen die Diode (D) und die Laststrecken des ersten Transistors (T1) und des zweiten Transistors (T2) bzw. der Vielzahl parallel geschalteter Transistoren (T2, T3, T4, T5) jeweils ein Widerstand (R3, R5, R6, R7, R8) geschaltet ist.

5. Schutzschaltung nach Anspruch 4,
   **dadurch gekennzeichnet, daß**
   der p-Anschluß der Diode mit dem Pad (2) und der n-Anschluß der Diode mit den Widerständen (R3, R5, R6, R7, R8) verbunden ist.

## Claims

1. Protective circuit on an integrated circuit, which limits a voltage at a pad (2) of an integrated circuit (1), the protective circuit (3) being connected between the pad (2) and a reference-earth potential (VSS) of the integrated circuit (1) and a threshold detector device (4) being provided, which is connected to the pad (2) and derives a threshold voltage (US) from the voltage at the pad (2), having:

   - a first transistor (T1), whose load path is connected to the pad (2) at a first terminal (K) and to whose control terminal (B) the threshold voltage (US) is fed, a resistor (R4) being connected between the second terminal (E) of the load path of the first transistor (T1) and the reference-earth potential (VSS), and

   - a second transistor (T2), whose control terminal (B) is connected to a second terminal (E) of the load path of the first transistor (T1) and whose load path is connected between the pad (2) and the reference-earth potential (VSS),

**characterized in that**
the threshold detector device (4) has a high-resistance voltage divider (R1, R2), which is connected between the pad (2) and the reference-earth potential (VSS), it being possible for the threshold voltage (US) to be tapped off at a node (5) of the voltage divider (R1, R2); and
a diode (D) is connected between the pad (2) and the load paths of the first transistor (T1) and of the second transistor (T2) in such a way that the diode (D) turns off if the voltage at the pad (2) falls below a predetermined value, so that the protective circuit (3) is switched off.

2. Protective circuit according to Claim 1,
   **characterized in that**
   the second transistor (T2) is formed from a multiplicity of transistors (T2, T3, T4, T5) connected in parallel, the control terminals (B) of the multiplicity of transistors (T2, T3, T4, T5) connected in parallel being connected to the second terminal (E) of the load path of the first transistor (T1) and the load paths of the multiplicity of transistors (T2, T3, T4, T5) connected in parallel being connected in parallel between the pad (2) and the reference-earth potential (VSS).

3. Protective circuit according to one of the preceding claims,
   **characterized in that**
   the transistors (T1, T2, T3, T4, T5) are npn bipolar transistors.

4. Protective circuit according to one of the preceding claims,
   **characterized in that**
   a respective resistor (R3, R5, R6, R7, R8) is connected between the diode (D) and the load paths of the first transistor (T1) and of the second transistor (T2) and, respectively, of the multiplicity of transistors (T2, T3, T4, T5) connected in parallel.

5. Protective circuit according to Claim 4,
   **characterized in that**
   the p terminal of the diode is connected to the pad (2) and the end terminal of the diode is connected to the resistors (R3, R5, R6, R7, R8).

**Revendications**

1. Circuit de protection sur un circuit intégré, qui limite une tension sur une la pastille (2) d'un circuit intégré (1), le circuit de protection (3) étant monté entre la pastille (2) et un potentiel de référence (VSS) du circuit intégré (1) et un dispositif de détection de seuil (4) étant prévu, lequel est relié à la pastille (2) et déduit une tension seuil (US) de la tension sur la pastille (2), comportant les éléments suivants :

   - un premier transistor (T1), dont le tronçon de charge est relié en un premier branchement (K) à la pastille(2) et dont on amène la tension de seuil (US) à son branchement de commande (B), une résistance (R4) étant branchée entre le deuxième branchement (E) du tronçon de charge du premier transistor (T1) et le potentiel de référence (VSS) et

   - un deuxième transistor (T2), dont le branchement de commande (B) est relié à un deuxième branchement (E) du tronçon de charge du premier transistor (T1) et dont le tronçon de charge est branché entre la pastille (2) et le potentiel de référence (VSS),

   **caractérisé en ce que**
   le dispositif de détection de seuil (4) présente un diviseur de tension (R1, R2), d'impédance élevée, qui est branché entre la pastille (2) et le potentiel de référence (VSS), la tension seuil (US) pouvant être prélevée en un point nodal (5) du diviseur de tension (R1, R2) ; et
   une diode (D) étant branchée entre la pastille (2) et les tronçons de charge du premier transistor (T1) et du deuxième transistor (T2) de telle façon que la diode (D) bloque lorsque la tension sur la pastille (2) descend au-dessous d'une valeur prédéfinie, ce qui fait que le circuit de protection (3) est déconnecté.

2. Circuit de protection selon la revendication 1,
   **caractérisé en ce que**
   le deuxième transistor (T2) est formé d'un grand nombre de transistors (T2, T3, T4, T5) branchés en parallèle, les branchements de commande (B) du grand nombre de transistors (T2, T3, T4, T5) branchés en parallèle étant reliés au deuxième branchement (E) du tronçon de charge du premier transistor (T1) et les tronçons de charge du grand nombre de transistors (T1, T2, T3, T4,T5) branchés en, parallèle étant montés en parallèle entre la pastille (2) et le potentiel de référence (VSS).

3. Circuit de protection selon l'une quelconque des revendications précédentes, **caractérisé en ce que**
   les transistors (T2, T3, T4, T5) sont des transistors bipolaires npn.

4. Circuit de protection selon l'une quelconque des revendications précédentes,
   **caractérisé en ce**
   **qu'**une résistance (R3, R5, R6, R7, R8) est montée à chaque fois entre la diode (D) et les tronçons de charge du premier transistor (T1) et du deuxième transistor (T2) ou du grand nombre de transistors branchés en parallèle (T2, T3, T4, T5).

5. Circuit de protection selon la revendication 4, **caractérisé en ce que**

le branchement p de la diode est relié à la pastille (2) et le branchement n de la diode aux résistances (R3, R5, R6, R7, R8).